# EUROPEAN PATENT APPLICATION

(11) **EP 4 704 174 A1**
(43) Date of publication of application: **04.03.2026**
(21) Application number: 24796889.4
(22) Date of filing: 17.04.2024
(51) Int. Cl.: H01M 4/139, H01M 4/13, H01M 4/62

(54) **SLURRY FOR FORMING ELECTRODE, NONAQUEOUS ELECTROLYTE SECONDARY BATTERY AND METHOD FOR MANUFACTURING SAME, AND DISPERSANT**

(30) Priority: 28.04.2023 JP 2023074129
(71) Applicant: FUJIFILM Corporation, Tokyo 106-8620 (JP)
(72) Inventor: OGAWA, Taiki, Minamiashigara-shi, Kanagawa 250-0193 (JP); MIZOGUCHI, Takao, Minamiashigara-shi, Kanagawa 250-0193 (JP)
(74) Representative: HGF
(86) International application number: PCT/JP2024/015278
(87) International publication number: WO 2024/225136

(57) **Abstract**

Provided is a slurry for forming an electrode containing an electrode active material, a conductive auxiliary agent, a non-aqueous electrolytic solution, and a dispersant, in which the dispersant consists of a polymer having a weight-average molecular weight of 1,000 to 15,000, the polymer containing 80% to 99% by mass of a constitutional component represented by Formula (1) and 1% to 20% by mass of constitutional components represented by Formulae (2) and (3) in total.

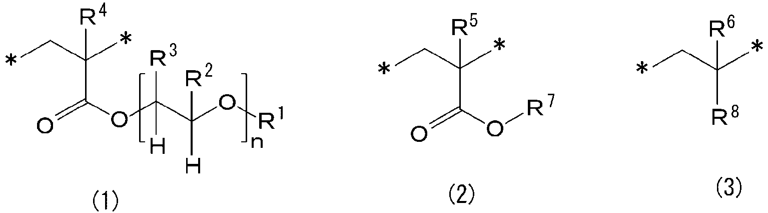

In the formulae,
* represents a linking site,
R¹ represents a hydrocarbon group having 1 to 8 carbon atoms,
R² to R⁶ represent a hydrogen atom or methyl,
R⁷ represents a hydrocarbon group having 5 to 18 carbon atoms,
R⁸ represents a group which has 1 to 12 carbon atoms and has a nitrogen atom, and
n is a number of 3 to 30.

## Description

### BACKGROUND OF THE INVENTION

### 1. Field of the Invention

The present invention relates to a slurry for forming an electrode of a non-aqueous electrolytic solution secondary battery, a non-aqueous electrolytic solution secondary battery and a method for manufacturing the same, and a dispersant.

### 2. Description of the Related Art

A non-aqueous electrolytic solution secondary battery typified by a lithium ion secondary battery has high energy density and is excellent in storage performance, low-temperature operability, and the like, and thus is widely used for portable electronic apparatuses such as a mobile phone and a notebook computer. In addition, the battery has been enlarged and used in transportation equipment such as automobiles, and the use of the battery as a storage device for nighttime power, power generation by natural energy, and the like has also been promoted.

A technique for increasing a capacity of the non-aqueous electrolytic solution secondary battery has been studied. For example, JP2022-139794A discloses a technique for causing an electrode active material layer to function as a secondary battery in a state of a slurry containing a high content of an active material. Specifically, JP2022-139794A discloses an electrochemical cell including a positive electrode consisting of a non-bonded body which contains a first active material and an electrolytic solution in a first non-aqueous liquid electrolyte; a negative electrode consisting of a non-bonded body which contains a second active material and an electrolytic solution in a second non-aqueous liquid electrolyte; and an ion-permeable membrane disposed between the positive electrode and the negative electrode, in which the positive electrode and the negative electrode each have a thickness of approximately 200 µm to approximately 3,000 µm.

According to the technique disclosed in JP2022-139794A, since an electrode active material layer (a positive electrode active material layer and a negative electrode active material layer) contains an electrolyte and is in a slurry-like and non-bonded state, as in the positive electrode and the negative electrode, the electrode active material layer can be formed into a thick film while maintaining flexibility of the electrode active material layer, a binder which bonds solid particles is not required, and the charge capacity and the entire energy density can be significantly increased while maintaining the flexibility of the battery. The non-aqueous electrolyte secondary battery in which the electrode active material layer is formed in a slurry state containing an electrolytic solution (electrolyte), as disclosed in JP2022-139794A, may be referred to as a semi-solid-state secondary battery in the following description.

### SUMMARY OF THE INVENTION

In order to further increase a capacity (energy density) of the semi-solid-state secondary battery, there is an attempt to increase a content of the electrode active material which stores and deintercalates ions in a slurry-like electrode active material layer. In this case, in the slurry for forming an electrode, used for forming the slurry-like electrode active material layer, a content of the electrode active material, which is solid particles, is further increased, and the slurry is applied onto a current collector. However, in a case where the content of the electrode active material in the slurry is high, properties of the slurry are in a state close to that of a powder while containing an electrolytic solution. As a result, fluidity of the slurry is reduced and it is difficult to carry out uniform coating, so that the performance of the obtained semi-solid-state secondary battery tends to be easily varied, and the battery performance (resistance, capacity, and the like) tends to be deteriorated.

The present invention relates to a technique capable of sufficiently increasing fluidity, improving handleability (manufacturing suitability), improving the performance of a non-aqueous electrolytic solution secondary battery (semi-solid-state secondary battery) to be obtained even in a case where the content of the electrode active material is high in a slurry for forming an electrode, the slurry containing an electrode active material, a conductive auxiliary agent, and a non-aqueous electrolytic solution (the "non-aqueous electrolytic solution" is a liquid composed of an electrolyte and a non-aqueous solvent).

That is, the present invention provides the following slurry for forming an electrode, the following non-aqueous electrolytic solution secondary battery and a method for manufacturing the same, and the following dispersant.
[1] A slurry for forming an electrode comprising:
   an electrode active material;
   a conductive auxiliary agent;
   a non-aqueous electrolytic solution; and
   a dispersant,
   in which the dispersant consists of a polymer having a weight-average molecular weight of 1,000 to 15,000, the polymer containing 80% to 99% by mass of a constitutional component represented by Formula (1) and 1% to 20% by mass of constitutional components represented by Formulae (2) and (3) in total, 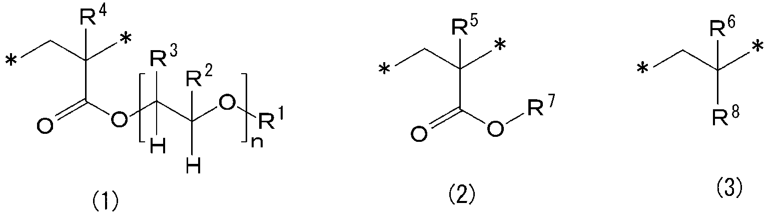 in the formulae,
      * represents a linking site,
      R¹ represents a hydrocarbon group having 1 to 8 carbon atoms,
      R² to R⁶ represent a hydrogen atom or methyl,
      R⁷ represents a hydrocarbon group having 5 to 18 carbon atoms,
      R⁸ represents a group which has 1 to 12 carbon atoms and has a nitrogen atom, and
      n is a number of 3 to 30.
[2] The slurry for forming an electrode according to [1],
   in which the electrode active material is a positive electrode active material, and a content of the positive electrode active material in the slurry for forming an electrode is 60% to 90% by mass.
[3] The slurry for forming an electrode according to [1],
   in which the electrode active material is a negative electrode active material, and a content of the negative electrode active material in the slurry for forming an electrode is 50% to 80% by mass.
[4] The slurry for forming an electrode according to [2] or [3],
   in which a content of the dispersant is 0.1 to 5.0 parts by mass in 100 parts by mass of a total of the non-aqueous electrolytic solution and the dispersant.
[5] A non-aqueous electrolytic solution secondary battery comprising:
   an electrode active material layer composed of the slurry for forming an electrode according to any one of [1] to [4].
[6] A method for manufacturing a non-aqueous electrolytic solution secondary battery, comprising:
   forming an electrode active material layer using the slurry for forming an electrode according to any one of [1] to [4].
[7] A dispersant used for a slurry for forming an electrode, containing an electrode active material, a conductive auxiliary agent, and a non-aqueous electrolytic solution, the dispersant comprising:
   the following polymer,
   <the polymer>
   a polymer having a weight-average molecular weight of 1,000 to 15,000, the polymer containing 80% to 99% by mass of a constitutional component represented by Formula (1) and 1% to 20% by mass of constitutional components represented by Formulae (2) and (3) in total, 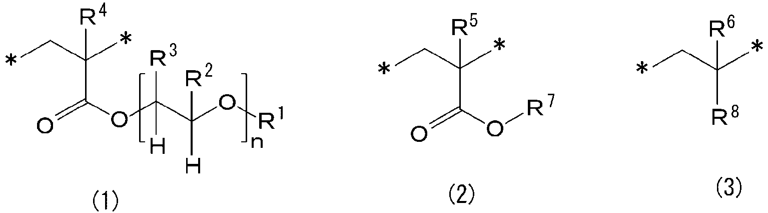 in the formulae,
      * represents a linking site,
      R¹ represents a hydrocarbon group having 1 to 8 carbon atoms,
      R² to R⁶ represent a hydrogen atom or methyl,
      R⁷ represents a hydrocarbon group having 5 to 18 carbon atoms,
      R⁸ represents a group which has 1 to 12 carbon atoms and has a nitrogen atom, and
      n is a number of 3 to 30.

In the description of the present invention, a numerical range represented by using "to" means a range including numerical values described before and after "to" as a lower limit value and an upper limit value.

In the present invention, "non-aqueous electrolytic solution" means an electrolytic solution which does not substantially contain water. That is, the "non-aqueous electrolytic solution" may contain a trace of water within a range that does not impair the effects of the present invention. The concentration of water in the "non-aqueous electrolytic solution" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous electrolytic solution.

In the present invention, "non-aqueous solvent" also means a solvent which does not substantially contain water. That is, the "non-aqueous solvent" may contain a trace of water within a range that does not impair the effects of the present invention. The concentration of water in the "non-aqueous solvent" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous solvent.

The slurry for forming an electrode according to the embodiment of the present invention can sufficiently improve fluidity even in a case where the content of the electrode active material is high, and has excellent handleability, and can improve the performance of a non-aqueous electrolytic solution secondary battery (semi-solid-state secondary battery) having a slurry-like electrode active material layer formed of the slurry. The non-aqueous electrolytic solution secondary battery according to the embodiment of the present invention is a non-aqueous electrolytic solution secondary battery having a slurry-like electrode active material layer formed of the slurry for forming an electrode according to the embodiment of the present invention. With the method of manufacturing a non-aqueous electrolytic solution secondary battery according to the aspect of the present invention, the non-aqueous electrolytic solution secondary battery according to the embodiment of the present invention can be obtained. In a case where the dispersant according to the embodiment of the present invention is contained in a slurry for forming an electrode, which contains an electrode active material, a conductive auxiliary agent, and a non-aqueous electrolytic solution, fluidity of the slurry can be sufficiently increased even in a case where the content of the electrode active material is high.

### BRIEF DESCRIPTION OF THE DRAWINGS

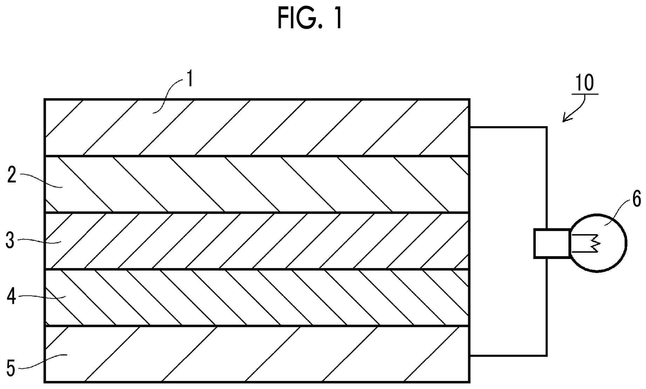

FIG. 1 is a longitudinal cross-sectional view schematically showing a basic lamination configuration of an embodiment of a non-aqueous electrolytic solution secondary battery.

### DESCRIPTION OF THE PREFERRED EMBODIMENTS

Preferred embodiments of the present invention will be described, but the present invention is not limited to these embodiments except as specified in the present invention.

### [Slurry for forming electrode]

The slurry for forming an electrode according to the embodiment of the present invention (also referred to as "slurry according to the embodiment of the present invention") is a slurry (suspension or dispersion liquid) containing an electrode active material, a conductive auxiliary agent, and a non-aqueous electrolytic solution, and is a slurry suitable for forming an electrode active material layer in a non-aqueous electrolytic solution secondary battery (that is, semi-solid-state secondary battery) having a slurry-like electrode active material layer. The slurry according to the embodiment of the present invention contains, in addition to the above-described respective components, a polymer having a specific structure and having a molecular weight within a specific range, as a dispersant.

Each component constituting the slurry according to the embodiment of the present invention will be described.

### <Dispersant>

The polymer constituting the above-described dispersant contains 80% to 99% by mass of a constitutional component represented by Formula (1) and 1% to 20% by mass of constitutional components represented by Formulae (2) and (3) in total. Here, "containing 1% to 20% by mass of the constitutional components represented by Formulae (2) and (3) in total" means that, in a case where the above-described polymer contains the constitutional component represented by Formula (2) and does not contain the constitutional component represented by Formula (3), a content of the constitutional component represented by Formula (2) in the above-described polymer is 1% to 20% by mass. In addition, in a case where the above-described polymer contains the constitutional component represented by Formula (3) and does not contain the constitutional component represented by Formula (2), a content of the constitutional component represented by Formula (3) in the above-described polymer is 1% to 20% by mass. In addition, in a case where the above-described polymer contains both the constitutional component represented by Formula (2) and the constitutional component represented by Formula (3), the total content of the constitutional component represented by Formula (2) and the constitutional component represented by Formula (3) in the polymer is 1% to 20% by mass.

The above-described polymer constituting the dispersant preferably contains 83% to 97% by mass of the constitutional component represented by Formula (1) and 3% to 17% by mass of the constitutional components represented by Formulae (2) and (3) in total; more preferably contains 85% to 95% by mass of the constitutional component represented by Formula (1) and 5% to 15% by mass of the constitutional components represented by Formulae (2) and (3) in total; still more preferably contains 87% to 95% by mass of the constitutional component represented by Formula (1) and 5% to 13% by mass of the constitutional components represented by Formulae (2) and (3) in total; and even more preferably contains 87% to 93% by mass of the constitutional component represented by Formula (1) and 7% to 13% by mass of the constitutional components represented by Formulae (2) and (3) in total.

The weight-average molecular weight (Mw) of the above-described polymer is in a range of 1,000 to 15,000. The Mw of the polymer can be determined by the following method.

### (Measurement of weight-average molecular weight)

In the present invention, the Mw of the polymer is measured by gel permeation chromatography (GPC). The Mw is Mw in terms of polyethylene oxide. As a method of measuring the Mw, a value measured by the following method is adopted in principle. In this case, an appropriate eluent (carrier) may be selected and used depending on the type of the polymer.
Measuring instrument: HLC-8320GPC (trade name, manufactured by Tosoh Corporation)
Column: TOSOH TSKgel guard column Super HZ-L, Super HZM-H, Super HZ4000, Super HZ2000 (trade name, all manufactured by Tosoh Corporation)
Carrier: tetrahydrofuran solution
Measurement temperature: 40°C
Carrier flow rate: 0.35 ml/min
Sample concentration: 0.2% by mass
Detector: refractive index (RI) detector

The Mw of the above-described polymer is preferably in a range of 1,500 to 14,000, more preferably in a range of 2,000 to 13,000, still more preferably in a range of 2,500 to 12,000, and even more preferably in a range of 2,500 to 10,000.

Since the above-described polymer contains each specific amount of each of the above-described constitutional components, and the Mw thereof is controlled to be within the above-described range, the polymer is in a liquid state at normal temperature (25°C) and exhibits compatibility with the non-aqueous solvent or the electrolytic solution in the slurry according to the embodiment of the present invention (that is, the polymer can be uniformly present without phase separation or precipitation in the slurry). The above-described polymer may have a constitutional component (other constitutional components) other than the constitutional components represented by Formulae (1) to (3). A content of the other constitutional components in the above-described polymer is preferably 10% by mass or less, more preferably 8% by mass or less, still more preferably 6% by mass or less, even more preferably 4% by mass or less, even still more preferably 2% by mass or less, further more preferably 1% by mass or less, and further still more preferably 0.5% by mass or less. Among these, it is preferable that the above-described polymer does not contain the other constitutional components.

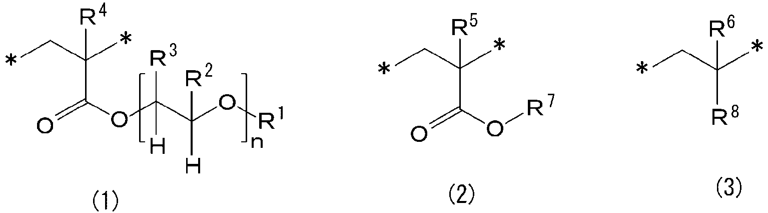

In the formulae, * represents a linking site for incorporation into the polymer structure. R¹ represents a hydrocarbon group having 1 to 8 carbon atoms. R² to R⁶ represent a hydrogen atom or methyl. R⁷ represents a hydrocarbon group having 5 to 18 carbon atoms. R⁸ represents a group which has 1 to 12 carbon atoms and has a nitrogen atom. n is a number of 3 to 30.

The R¹ in Formula (1) is preferably a chain-like (acyclic) hydrocarbon group. The chain-like hydrocarbon group may be linear or branched, and is preferably linear.

The R¹ is preferably a hydrocarbon group having 1 to 6 carbon atoms, and the number of carbon atoms in the hydrocarbon group is more preferably 1 to 5, still more preferably 1 to 4, and even more preferably 1 to 3. The R¹ is still more preferably methyl or ethyl, and particularly preferably methyl.

In Formula (1), n represents an average addition molar number of the oxyalkylene group. n is preferably 5 to 30, more preferably 6 to 25, still more preferably 7 to 20, and even more preferably 8 to 15.

The R⁷ in Formula (2) may be a chain-like (acyclic) hydrocarbon group or a hydrocarbon group having a cyclic structure, and a hydrocarbon group having a cyclic structure is more preferable. In a case where R⁷ is a chain-like hydrocarbon group, it may be linear or may have a branch, and it is preferably linear. In a case where R⁷ is a hydrocarbon group having a cyclic structure, a hydrocarbon group having an aromatic ring is preferable, and a hydrocarbon group having a benzene ring or a naphthalene ring is more preferable.

The R⁷ is preferably a hydrocarbon group having 6 to 17 carbon atoms, and the number of carbon atoms in the hydrocarbon group is more preferably 6 to 16, still more preferably 6 to 15, even more preferably 6 to 14, even still more preferably 7 to 12, and particularly preferably 7 to 11.

It is preferable that the R⁸ in Formula (3) is bonded to a nitrogen atom with respect to the carbon atom (the same as the carbon atom to which R⁶ is bonded) to which R⁸ is bonded. In addition, it is also preferable that the constitutional component represented by Formula (3) is a constitutional component derived from a (meth)acrylamide compound (an acrylamide compound or a methacrylamide compound).

The number of nitrogen atoms in the R⁸ is preferably 1 to 3, more preferably 1 or 2, and still more preferably 1. The R⁸ includes a carbon atom and a hydrogen atom as constituent elements other than the nitrogen atom. In addition, it is also preferable that the R⁸ includes an oxygen atom. The oxygen atom is preferably present as a constituent element of a carbonyl group. In addition, the number of oxygen atoms in the R⁸ is preferably 1 to 3, more preferably 1 or 2, and still more preferably 1.

The R⁸ may have a chain-like structure or a cyclic structure. In a case where the R⁸ has a chain-like structure, it may have a branch.

The number of carbon atoms in the R⁸ is preferably 2 to 12, more preferably 3 to 12, and still more preferably 4 to 12.

In the above-described polymer, the constitutional component represented by Formula (1) mainly exhibits an affinity for the non-aqueous electrolytic solution (non-aqueous solvent), and the constitutional component represented by Formula (2) or (3) mainly exhibits an affinity for the electrode active material. In this manner, the polymer effectively functions as a dispersant which increases the dispersibility of the electrode active material in the non-aqueous electrolytic solution and reduces the viscosity of the slurry. The above-described polymer may be any of a random polymer, a block polymer, or a graft polymer, and is preferably a random polymer.

In a case where the slurry according to the embodiment of the present invention is a slurry for forming a positive electrode or a slurry for forming a negative electrode, a content of the above-described dispersant (polymer) in the slurry according to the embodiment of the present invention is preferably 0.1 to 5.0 parts by mass, more preferably 0.2 to 4.0 parts by mass, still more preferably 0.4 to 3.0 parts by mass, even more preferably 0.6 to 2.5 parts by mass, even still more preferably 0.7 to 2.0 parts by mass, further more preferably 0.8 to 1.8 parts by mass, further still more preferably 0.8 to 1.6 parts by mass, even further more preferably 0.8 to 1.4 parts by mass, and even further still more preferably 0.8 to 1.2 parts by mass with respect to the total of 100 parts by mass of the non-aqueous electrolytic solution and the dispersant.

Preferred specific examples of a monomer from which each constitutional component represented by each of Formulae (1) to (3) is derived are shown below, but the present invention is not limited to these specific examples. In the following structural formulae, "Me" represents methyl, and each structural formula is given an abbreviation of a monomer, and the formal name is described in the section of Examples.

### -Monomer from which constitutional component represented by Formula (1) is derived-

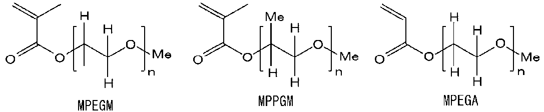

### -Monomer from which constitutional component represented by Formula (2) is derived-

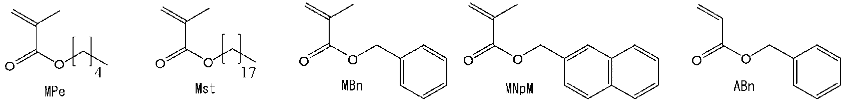

### -Monomer from which constitutional component represented by Formula (3) is derived-

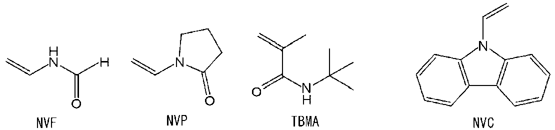

### <Electrode active material>

In a case of being used for forming a positive electrode active material layer, the slurry according to the embodiment of the present invention contains a positive electrode active material as the electrode active material; and in a case of being used for forming a negative electrode active material layer, the slurry according to the embodiment of the present invention contains a negative electrode active material as the electrode active material.

### (Positive electrode active material)

As the positive electrode active material, a positive electrode active material capable of reversibly intercalating and deintercalating lithium ions is preferable. The material is not particularly limited as long as it exhibits desired electron conductivity, and examples thereof include transition metal oxides, organic matter, substances capable of being complexed with Li, such as sulfur, and complexes of sulfur and metal.

Among these, as the positive electrode active material, lithium-containing transition metal oxides are preferably used, and lithium-containing transition metal oxides having a transition metal element M^{a} (one or more elements selected from Co, Ni, Fe, Mn, Cu, and V) are more preferable. In addition, an element M^{b} (an element of Group 1 (Ia) of the periodic table other than lithium, an element of Group 2 (IIa), or an element such as Al, Ga, In, Ge, Sn, Pb, Sb, Bi, Si, P, and B) may be mixed into the lithium-containing transition metal oxide. The mixed amount is preferably 0 to 30 mol% with respect to the amount (100 mol%) of the transition metal element M^{a}. It is more preferable that the transition metal oxide is synthesized by mixing the above-described components such that a molar ratio Li/M^{a} is 0.3 to 2.2.

Specific examples of the lithium-containing transition metal oxide include (MA) lithium-containing transition metal oxides having a bedded salt-type structure, (MB) lithium-containing transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds.

Specific examples of the lithium-containing transition metal oxide having a bedded salt-type structure (MA) include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Specific examples of the lithium-containing transition metal oxide having a spinel-type structure (MB) include LiMn₂O₄ (LMO), LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound (MC) include olivine-type iron phosphate salts such as LiFePO₄ and Li₃Fe₂(PO₄)₃; cobalt phosphates such as LiCoPO₄; iron pyrophosphates such as LiFeP₂O₇; and monoclinic NASICON-type vanadium phosphate salts such as Li₃V₂(PO₄)₃ (lithium vanadium phosphate).

Examples of the lithium-containing transition metal halogenated phosphoric acid compound (MD) include iron fluorophosphates such as Li₂FePO₄F, manganese fluorophosphates such as Li₂MnPO₄F, and cobalt fluorophosphates such as Li₂CoPO₄F.

Examples of the lithium-containing transition metal silicate compound (ME) include Li₂FeSiO₄, Li₂MnSiO₄, and Li₂CoSiO₄.

In the present invention, the positive electrode active material is preferably the lithium-containing transition metal phosphoric acid compound (MC), and more preferably LiFePO₄.

A shape of the positive electrode active material is not particularly limited, but is preferably a particulate shape.

An average particle diameter (sphere-equivalent average particle diameter) of the positive electrode active material is not particularly limited. For example, the average particle diameter can be 0.1 to 50 µm, preferably 0.2 to 30 µm, more preferably 0.5 to 20 µm, and still more preferably 0.8 to 10 µm.

In order to allow the positive electrode active material to have a predetermined particle diameter, a typical pulverizer or classifier may be used. A positive electrode active material obtained using a baking method may be used after being washed with water, an acidic aqueous solution, an alkaline aqueous solution, or an organic solvent.

In a case where a commercially available positive electrode active material is used, the average particle diameter of the positive electrode active material is adopted as the value described in the catalog of the manufacturer.

In a case where the information on the average particle diameter of the manufacturer cannot be obtained or in a case where a synthesized positive electrode active material is used, the average particle diameter value (volume-based median diameter D50 in water) obtained by dispersing the positive electrode active material in water and measuring the particle diameter with a laser diffraction/scattering-type particle size distribution analyzer (for example, Particle LA-960V2 manufactured by HORIBA, Ltd.) is adopted. The same applies to an average particle diameter of solid particles other than the positive electrode active material.

A chemical formula of a compound obtained by the above-described baking method can be calculated using an inductively coupled plasma (ICP) emission spectroscopy as a measuring method from the mass difference of powder before and after baking as a convenient method.

A surface of the positive electrode active material may be coated with an oxide such as another metal oxide and a carbon-based material. These surface coating layers can function as an interface resistance-stabilizing layer.

Examples of a surface coating material include a metal oxide containing Ti, Nb, Ta, W, Zr, Al, Si, or Li. Examples thereof include spinel-type titanium oxides, tantalum-based oxides, niobium-based oxides, and lithium niobate-based compounds; and specific examples thereof include Li₄Ti₅O₁₂, Li₂Ti₂O₅, LiTaO₃, LiNbO₃, LiAlO₂, Li₂ZrO₃, Li₂WO₄, Li₂TiO₃, Li₂B₄O₇, Li₃PO₄, Li₂MoO₄, Li₃BO₃, LiBO₂, Li₂CO₃, Li₂SiO₃, SiO₂, TiO₂, ZrO₂, Al₂O₃, B₂O₃, and Li₃AlF₆. In addition, a carbon-based material such as C, SiC, and SiOC (carbon-added silicon oxide) can also be used as the surface coating material.

From the viewpoint of increasing electron conductivity to a desired level, the positive electrode active material may be coated with the carbon-based material. In this case, it is preferable that the surface of the positive electrode active material is coated with carbon (C). The surface coating with carbon can be formed by firing the positive electrode active material in the presence of an additive (organic substance) serving as a carbon source. As the additive, for example, a styrene-maleic acid anhydride copolymer, polystyrene, polycarbonate, or the like can be used.

In addition, the surface of the positive electrode active material may be subjected to a surface treatment with sulfur or phosphorus.

Furthermore, a surface treatment may be carried out on surfaces of particles of the positive electrode active material with an actinic ray or an active gas (plasma or the like) before or after the coating of the surfaces.

One kind of the above-described positive electrode active material may be used alone, or two or more kinds thereof may be used in combination.

In a case where the slurry according to the embodiment of the present invention contains the positive electrode active material (in a case of a slurry for forming a positive electrode), a content of the positive electrode active material in the solid content of the slurry, which depends on the content of the conductive auxiliary agent, is preferably 95.00% to 99.95% by mass, more preferably 96.00% to 99.90% by mass, and still more preferably 97.00% to 99.80% by mass.

In a case where the slurry according to the embodiment of the present invention contains the positive electrode active material (in a case of a slurry for forming a positive electrode), it is preferable that the content of the positive electrode active material in the slurry is as high as possible within a range in which a desired low viscosity can be achieved. For example, the content of the positive electrode active material in the slurry can be 60% to 90% by mass, more preferably 65% to 88% by mass, still more preferably 70% to 86% by mass, and even more preferably 72% to 85% by mass, and it is also preferably 73% to 84% by mass, 73% to 83% by mass, 73% to 82% by mass, or 73% to 81% by mass.

### (Negative electrode active material)

As the negative electrode active material, a positive electrode active material capable of reversibly absorbing and deintercalating lithium ions is preferable. The material is not particularly limited as long as the material has desired characteristics, and examples thereof include a carbonaceous material, a silicon-based material, a metal oxide, a metal composite oxide, lithium, a lithium alloy, and a negative electrode active material capable of forming an alloy with lithium. Among these, in view of reliability, a carbonaceous material or a silicon-based material is preferably used.

The carbonaceous material used as the negative electrode active material is a material substantially consisting of carbon. Examples thereof include carbon black such as petroleum pitch, graphite (natural graphite and artificial graphite such as vapor-grown graphite), and carbonaceous material obtained by baking various synthetic resins such as a polyacrylonitrile (PAN)-based resin and a furfuryl alcohol resin. Furthermore, examples thereof also include various carbon fibers such as PAN-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber; mesophase microspheres, graphite whisker, and tabular graphite.

The metal oxide and the metal composite oxide, used as the negative electrode active material, are not particularly limited as long as they are oxides capable of absorbing and deintercalating lithium, and are preferably noncrystalline oxides. Preferred examples thereof also include chalcogenide which is a reaction product of a metal element and a Group 16 element of the periodic table. The "noncrystalline" herein means an oxide having a broad scattering band with an apex in a range of 20° to 40° in terms of the 20 value in case of being measured by an X-ray diffraction method using a CuKα ray, and the oxide may have a crystalline diffraction line.

In the noncrystalline oxides and the chalcogenides described above, the noncrystalline oxide of a metalloid element or the above-described chalcogenide is more preferable; and an oxide consisting of one element or a combination of two or more elements selected from elements (Al, Ga, Si, Sn, Ge, Pb, Sb, and Bi) of Group 13 (IIIB) to Group 15 (VB) of the periodic table or the chalcogenide is particularly preferable. Specific examples of the preferred noncrystalline oxide and chalcogenide preferably include Ga₂O₃, GeO, PbO, PbO₂, Pb₂O₃, Pb₂O₄, Pb₃O₄, Sb₂O₃, Sb₂O₄, Sb₂O₈Bi₂O₃, Sb₂O₈Si₂O₃, Sb₂O₅, Bi₂O₃, Bi₂O₄, GeS, PbS, PbS₂, Sb₂S₃, and Sb₂S₅.

From the viewpoint of charge and discharge characteristics at a high current density, it is preferable that the metal (composite) oxide and the chalcogenide contain at least one of titanium or lithium as a constitutional component. Examples of the metal composite oxide (lithium composite metal oxide) including lithium include a composite oxide of lithium oxide and the above metal (composite) oxide or the above chalcogenide, and specifically, Li₂SnO₂.

It is also preferable that the negative electrode active material contains a titanium atom. More specifically, TiNb₂O₇ (niobium titanium oxide [NTO]) or Li₄Ti₅O1₂ (lithium titanate [LTO]), which goes through a slight volume change in absorbing and deintercalating lithium ions, is preferable because these compounds exhibit excellent high-speed charging and discharging characteristics, suppress the deterioration of an electrode, and can increase the life of a lithium ion secondary battery.

The lithium alloy as the negative electrode active material is not particularly limited as long as it is typically used as a negative electrode active material for a secondary battery, and examples thereof include a lithium aluminum alloy.

The negative electrode active material capable of forming an alloy with lithium is not particularly limited as long as it is typically used as a negative electrode active material for a secondary battery. Such an active material has a large expansion and contraction due to charging and discharging, and the bonding property of the solid particles is reduced as described above; but in the present invention, high bonding property can be achieved by the above-described binder. Examples of such an active material include negative electrode active materials having a silicon atom or a tin atom, and respective metals such as Al, In, and the like; and a negative electrode active material having a silicon atom which achieves a higher battery capacity (silicon atom-containing active materials) is preferable, and a silicon atom-containing active material having a silicon atom content of 40 mol% or more of all constituent atoms is more preferable.

Generally, a negative electrode containing these negative electrode active materials (for example, an Si negative electrode containing a silicon atom-containing active material and an Sn negative electrode containing a tin atom-containing active material) can absorb a larger amount of Li ions than carbon negative electrodes (such as graphite and acetylene black). That is, the amount of Li ions absorbed per unit mass increases. Therefore, the battery capacity (energy density) can be increased. As a result, there is an advantage in that the battery driving duration can be extended.

Examples of the silicon atom-containing active material include a silicon material such as Si and SiOx (0 < x ≤ 1), an alloy containing titanium, vanadium, chromium, manganese, nickel, copper, or lanthanum (for example, LaSi₂ and VSi₂), a structured active material (for example, LaSi2/Si), and an active material containing a silicon atom and a tin atom, such as SnSiO₃ and SnSiS₃. Since SiOx itself can be used as the negative electrode active material (the metalloid oxide) and Si is produced along with the operation of the battery, SiOx can be used as an active material (or a precursor material thereof) capable of forming an alloy with lithium.

Examples of the negative electrode active materials having a tin atom include Sn, SnO, SnO₂, SnS, SnS₂, and active materials containing the above-described silicon atom and a tin atom. In addition, examples thereof include a composite oxide with lithium oxide, for example, Li₂SnO₂.

A shape of the negative electrode active material is not particularly limited, but is preferably a particle shape. An average particle diameter of the negative electrode active material is preferably 0.1 to 60 µm. In order to have a predetermined particle diameter, a typical pulverizer or classifier is used. For example, a mortar, a ball mill, a sand mill, a vibratory ball mill, a satellite ball mill, a planetary ball mill, a vortex airflow-type jet mill, a sieve, or the like is suitably used. During the pulverization, wet pulverization of causing water or an organic solvent such as methanol to coexist with the negative electrode active material can be performed. In order to provide the desired particle diameter, classification is preferably performed. The classification method is not particularly limited, and a sieve, an air classifier, or the like can be used as desired. Both a dry-type classification and a wet-type classification can be used.

One kind of the above-described negative electrode active material may be used alone, or two or more kinds thereof may be used in combination. Among these, a combination of the silicon atom-containing active material and the carbonaceous material is preferable, and a combination of SiOx (0 < x ≤ 1) and graphite is particularly preferable. A mass ratio (SiOx/graphite) in a case of combining SiOx (0 < x ≤ 1) and graphite is preferably 2 or less, more preferably 1 or less, and still more preferably 0.5 or less.

In a case of forming the negative electrode active material layer, a mass (mg) of the negative electrode active material per unit area (cm²) of the negative electrode active material layer (mass per unit area) is not particularly limited. The mass per unit area can be appropriately determined depending on the designed battery capacity.

In a case where the slurry according to the embodiment of the present invention contains the negative electrode active material (in a case of a slurry for forming a negative electrode), a content of the negative electrode active material in the solid content of the slurry, which depends on the content of the conductive auxiliary agent, is preferably 95.00% to 99.95% by mass, more preferably 96.00% to 99.90% by mass, and still more preferably 97.00% to 99.80% by mass.

In a case where the slurry according to the embodiment of the present invention contains the negative electrode active material (in a case of a slurry for forming a negative electrode), it is preferable that the content of the negative electrode active material in the slurry is as high as possible within a range in which a desired low viscosity can be achieved. For example, the content of the negative electrode active material in the slurry can be 50% to 80% by mass, more preferably 55% to 78% by mass, still more preferably 58% to 76% by mass, and even more preferably 60% to 75% by mass, and it is also preferably 62% to 74% by mass or 63% to 73% by mass.

### <Conductive auxiliary agent>

The slurry according to the embodiment of the present invention contains a conductive auxiliary agent. The conductive auxiliary agent is not particularly limited, a conductive auxiliary agent which is known as a general conductive auxiliary agent can be used. For example, the conductive auxiliary agent may be graphite such as natural graphite and artificial graphite; carbon black such as acetylene black, ketjen black, and furnace black; irregular carbon such as needle cokes; a carbon fiber such as vapor-grown carbon fiber and carbon nanotube; a carbonaceous material such as graphene and fullerene which are electron-conductive materials; metal powder or a metal fiber of copper, nickel, or the like; and a conductive polymer such as polyaniline, polypyrrole, polythiophene, polyacetylene, and a polyphenylene derivative.

In a case where the electrode active material and the conductive auxiliary agent are used in combination, among the above-described conductive auxiliary agents, a conductive auxiliary agent which does not intercalate and deintercalate Li and does not function as an active material at the time of charging and discharging a battery is regarded as the conductive auxiliary agent. Therefore, among the conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

One kind of conductive auxiliary agent or two or more kinds of conductive auxiliary agents may be used.

A shape of the conductive auxiliary agent is not particularly limited, but is preferably a particulate shape.

An average particle diameter (sphere-equivalent average particle diameter) of the conductive auxiliary agent is not particularly limited. For example, the average particle diameter is preferably 0.01 to 50 µm, more preferably 0.1 to 10 µm, and still more preferably 0.2 to 2.0 µm.

In a case where the slurry according to the embodiment of the present invention is the slurry for forming a positive electrode or the slurry for forming a negative electrode, a content of the conductive auxiliary agent in the solid content of the slurry according to the embodiment of the present invention is preferably 0.05% to 5.00% by mass, more preferably 0.10% to 4.00% by mass, and still more preferably 0.20% to 3.00% by mass.

In a case where the slurry according to the embodiment of the present invention is the slurry for forming a positive electrode or the slurry for forming a negative electrode, the content of the conductive auxiliary agent in the slurry according to the embodiment of the present invention can be, for example, 0.1% to 10% by mass, preferably 0.1% to 7% by mass, more preferably 0.2% to 5% by mass, still more preferably 0.4% to 3% by mass, and even more preferably 0.6% to 2% by mass.

### <Non-aqueous electrolytic solution>

The non-aqueous electrolytic solution contained in the slurry according to the embodiment of the present invention is composed of an electrolyte (electrolyte salt) and a non-aqueous solvent which dissolves the electrolyte.

### (Electrolyte)

As the electrolyte, an electrolyte which can be used for the electrolytic solution of the semi-solid-state secondary battery can be appropriately used. The electrolyte is preferably a metal salt, and examples thereof include a lithium salt, a potassium salt, a sodium salt, a calcium salt, and a magnesium salt.

As the lithium salt, a lithium salt which is usually used for an electrolyte of a lithium ion secondary battery is preferable, and examples thereof include the following lithium salts.
(L-1) Inorganic lithium salt: inorganic fluoride salt such as LiPF₆, LiBF₄, LiAsF₆, and LiSbF₆; perhalogenate such as LiClO₄, LiBrO₄, and LiIO₄; an inorganic chloride salt such as LiAlCl₄; and the like
(L-2) Fluorine-containing organic lithium salt: perfluoroalkane sulfonate such as LiCF₃SO₃; perfluoroalkanesulfonylimide salt such as LiN(CF₃SO₂)₂, LiN(CF₃CF₂SO₂)₂, LiN(FSO₂)₂, and LiN(CF₃SO₂)(C₄F₉SO₂); perfluoroalkane sulfonylmethide salt such as LiC(CF₃SO₂)₃; fluoroalkyl fluorophosphate such as Li[PF₅(CF₂CF₂CF₃)], Li[PF₄(CF₂CF₂CF₃)₂], Li[PF₃(CF₂CF₂CF₃)₃], Li[PF5(CF₂CF₂CF₂CF₃)], Li[PF₄(CF₂CF₂CF₂CF₃)₂], and Li[PF₃(CF₂CF₂CF₂CF₃)₃]; and the like
(L-3) Oxalatoborate salt: lithium bis(oxalato)borate, lithium difluorooxalatoborate, and the like

Among these, LiPF₆, LiBF₄, LiAsF₆, LiSbF₆, LiClO₄, Li(R^{f1}SO₃), LiN(R^{f1}SO₂)₂, LiN(FSO₂)₂, or LiN(R^{f1}SO₂)(R^{f2}SO₂) is preferable; LiPF₆, LiBF₄, LiN(R^{f1}SO₂)₂, LiN(FSO₂)₂, or LiN(R^{f1}SO₂)(R^{f2}SO₂) is more preferable; and LiPF₆ is particularly preferable. Here, R^{f1} and R^{f2} each represent a perfluoroalkyl group, and the number of carbon atoms in the perfluoroalkyl group is preferably 1 to 6.

In the non-aqueous electrolytic solution, the electrolyte may be used alone or in combination of two or more kinds thereof.

In the slurry according to the embodiment of the present invention, a concentration of the electrolyte in the non-aqueous electrolytic solution is not particularly limited as long as it functions as the non-aqueous electrolytic solution. It can be set to, for example, 10.0% to 50.0% by mass, preferably 15.0% to 30.0% by mass. A molar concentration thereof is preferably 0.5 to 1.5 M.

### (Non-aqueous solvent)

As the non-aqueous solvent which is the solvent of the non-aqueous electrolytic solution, aprotic organic solvents are preferable; and among these, an aprotic organic solvent having 2 to 10 carbon atoms is more preferable.

Examples of such a non-aqueous solvent include a chain-like or cyclic carbonate compound, a lactone compound, a chain-like or cyclic ether compound, an ester compound, a nitrile compound, an amide compound, an oxazolidinone compound, a nitro compound, a chain-like or cyclic sulfone or sulfoxide compound, and a phosphoric acid ester compound.

Among these, a compound having an ether bond, a carbonyl bond, an ester bond, or a carbonate bond is preferable. These compounds may have a substituent.

Examples of the non-aqueous solvent include ethylene carbonate, fluorinated ethylene carbonate, vinylene carbonate, propylene carbonate, butylene carbonate, dimethyl carbonate, diethyl carbonate, ethyl methyl carbonate, methyl propyl carbonate, γ-butyrolactone, γ-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethyl acetate, ethyl trimethyl acetate, acetonitrile, glutaronitrile, adiponitrile, methoxyacetonitrile, 3-methoxypropionitrile, N,N-dimethylformamide, N-methylpyrrolidone (NMP), N-methyloxazolidinone, N,N'-dimethylimidazolidinone, nitromethane, nitroethane, sulfolane, trimethyl phosphate, dimethylsulfoxide, and dimethylsulfoxide phosphoric acid. These may be used alone or in combination of two or more. Among these, at least one of the group consisting of ethylene carbonate, propylene carbonate, dimethyl carbonate, diethyl carbonate, ethyl methyl carbonate, and γ-butyrolactone is preferable; and a combination of a high-viscosity (high-dielectric constant) solvent (for example, relative permittivity ε ≥ 30) such as ethylene carbonate and propylene carbonate and a low-viscosity solvent (for example, viscosity ≤ 1 mPa·s) such as dimethyl carbonate, ethyl methyl carbonate, and diethyl carbonate is more preferable. By using a mixed solvent having such a combination, dissociation properties of electrolytes and mobility of ions are improved. As the above-described non-aqueous solvent, a combination of ethylene carbonate, dimethyl carbonate, and ethyl methyl carbonate is particularly preferable.

A content of the non-aqueous electrolytic solution in the slurry according to the embodiment of the present invention is preferably 8% to 38% by mass, more preferably 10% to 33% by mass, and still more preferably 12% to 28% by mass, and it is also preferably 13% to 26% by mass, 14% to 25% by mass, 16% to 25% by mass, 18% to 25% by mass, or 20% to 25% by mass in a case of the slurry for forming a positive electrode. In addition, in a case of the slurry for forming a negative electrode, the content thereof is preferably 18% to 48% by mass, more preferably 20% to 43% by mass, still more preferably 22% to 40% by mass, and even more preferably 23% to 38% by mass, and it is also preferably 24% to 36% by mass or 25% to 35% by mass.

### <Other components>

The slurry according to the embodiment of the present invention can contain, as desired, an ionic liquid, a thickener, an antifoaming agent, a leveling agent, a dehydrating agent, an antioxidant, or the like. These components can be used as those which are usually used in the non-aqueous electrolytic solution secondary battery.

In a case where the slurry according to the embodiment of the present invention contains other components, a content of the other components is preferably 0.05 to 1.5 parts by mass and more preferably 0.1 to 1.0 parts by mass with respect to 100 parts by mass of the total content of the electrode active material and the conductive auxiliary agent.

The slurry according to the embodiment of the present invention can be obtained by uniformly mixing the respective components constituting the slurry. For example, a slurry in which the electrode active material and the conductive auxiliary agent are dispersed in the above-described solution can be obtained by mixing the non-aqueous solvent, the electrolyte, and the polymer to obtain a solution in which the non-aqueous electrolytic solution and the polymer are compatible with each other, and mixing the solution with the electrode active material and the conductive auxiliary agent. The mixing method is not particularly limited, and a method commonly used in the technical field can be appropriately adopted.

### [Non-aqueous electrolytic solution secondary battery]

The non-aqueous electrolytic solution secondary battery according to the embodiment of the present invention (hereinafter, also referred to as "secondary battery according to the embodiment of the present invention") is a non-aqueous electrolytic solution secondary battery having an electrode active material layer composed of the slurry according to the embodiment of the present invention. That is, the secondary battery according to the embodiment of the present invention is a so-called semi-solid-state secondary battery in which at least one of a positive electrode active material layer or a negative electrode active material layer is formed of the slurry according to the embodiment of the present invention. The secondary battery according to the embodiment of the present invention generally includes a positive electrode collector, a positive electrode active material layer, a separator, a negative electrode active material layer, and a negative electrode collector in this order, in which at least one of the positive electrode active material layer or the negative electrode active material layer is formed of the slurry according to the embodiment of the present invention. In the non-aqueous electrolytic solution secondary battery according to the embodiment of the present invention, it is preferable that both the positive electrode active material layer and the negative electrode active material layer are formed of the slurry according to the embodiment of the present invention.

Before the description of the secondary battery according to the embodiment of the present invention, a structure of a general non-aqueous electrolytic solution secondary battery will be described.

FIG. 1 is a schematic cross-sectional view showing a laminated structure of a general non-aqueous electrolytic solution secondary battery 10, including a working electrode which acts in a case where the battery is operated. The non-aqueous electrolytic solution secondary battery 10 has a laminated structure (hereinafter, also referred to as an electrode laminate) in which a negative electrode collector 1, a negative electrode active material layer 2, a separator 3, a positive electrode active material layer 4, and a positive electrode collector 5 are laminated in this order from the negative electrode side. The negative electrode active material layer 2, the positive electrode active material layer 4, and a space therebetween are filled with a non-aqueous electrolytic solution (not shown), and are separated by the separator 3. The separator 3 has pores, and functions as a positive and negative electrode-separating membrane which insulates the positive electrode and the negative electrode from each other while allowing transmission of the electrolytic solution and ions into the pores in a state in which a typical battery is used. With such a structure, for example, in the case of lithium ion secondary battery, during charge, while electrons (e⁻) are supplied to the negative electrode side through an external circuit, lithium ions (Li⁺) move from the positive electrode through the electrolytic solution and are accumulated in the negative electrode. On the other hand, during discharge, while the lithium ions (Li⁺) accumulated in the negative electrode are returned to the positive electrode side through the electrolytic solution, electrons are supplied to an operation portion 6. In the example shown in the drawing, a light bulb is adopted as the operation portion 6, which is turned on by the discharge.

Subsequently, a basic configuration characteristic of the semi-solid-state secondary battery will be described. As described above, in the semi-solid-state secondary battery, the electrode active material layer is formed in a slurry state containing an electrode active material and an electrolyte. Therefore, the secondary battery according to the embodiment of the present invention is different from a general non-aqueous electrolytic solution secondary battery in terms of the fact that the electrode active material layer is a layer formed of a slurry (suspension or dispersion liquid) obtained by dispersing the electrode active material in a non-aqueous electrolytic solution.

That is, in a general non-aqueous electrolytic solution secondary battery, a coating liquid is prepared in which the electrode active material is dispersed in a medium containing no electrolyte, the coating liquid is applied onto a collector to form a coating film, and then the coating film is dried to form a thin film-shaped electrode active material layer. The coating liquid is usually blended with a binding material (binder), and a hard electrode active material layer in which electrode active material particles are firmly bound to each other is formed. Since the non-aqueous electrolytic solution is present on the electrode active material layer formed in this way (between the negative electrode active material layer and the positive electrode active material layer), the electrode active material layer is in a state of a hard solid particle layer as a whole even in a case where there is a portion in which the non-aqueous electrolytic solution can permeate, and is not a slurry layer.

On the other hand, in the semi-solid-state secondary battery, the electrode active material layer is an electrode slurry layer obtained by dispersing the solid particles containing the electrode active material and the conductive auxiliary agent in the non-aqueous electrolytic solution which is obtained by dissolving the electrolyte such as the lithium salt in the non-aqueous solvent. In a case where the electrode slurry layer functions as the electrode active material layer, a strong bonding property is not required between the electrode active material particles, and thus the electrode slurry layer generally does not contain a binding material. The basic layer configuration of the semi-solid-state secondary battery is the same as the layer configuration shown in FIG. 1, except that the electrode active material layer is an electrode slurry layer and the electrode slurry layer and the separator are in contact with each other.

In the secondary battery according to the embodiment of the present invention, at least one electrode active material layer of the positive electrode active material layer or the negative electrode active material layer is a slurry layer formed of the slurry according to the embodiment of the present invention. In the secondary battery according to the embodiment of the present invention, it is preferable that both the positive electrode active material layer and the negative electrode active material layer are slurry layers formed of the slurry according to the embodiment of the present invention.

In the secondary battery according to the embodiment of the present invention, each of materials and members such as the positive electrode collector, the negative electrode collector, and the separator is not particularly limited, except that the slurry according to the embodiment of the present invention is used for forming at least one electrode active material layer of the positive electrode active material layer or the negative electrode active material layer. As these materials, members, and the like, those used for a typical secondary battery can be appropriately adopted. For the members and the manufacturing methods which are usually used for these secondary batteries, for example, JP2016-201308A, JP2005-108835A, JP2012-185938A, WO2018/135395A, and the like can be appropriately referred to.

In the secondary battery according to the embodiment of the present invention, a thickness of the electrode active material layer (slurry layer) is not particularly limited, and it can be set to, for example, 5 to 500 µm, preferably 20 to 400 µm, more preferably 40 to 400 µm, and still more preferably 80 to 350 µm.

### [Method for manufacturing non-aqueous electrolytic solution secondary battery]

The method of manufacturing a non-aqueous electrolytic solution secondary battery according to the embodiment of the present invention includes forming an electrode active material layer using the slurry according to the embodiment of the present invention; and typically includes applying the slurry according to the embodiment of the present invention onto an electrode collector to form a slurry-like electrode active material layer. In a case where the electrode is a positive electrode, a slurry for forming a positive electrode, which contains a positive electrode active material, is applied onto a positive electrode collector as the slurry according to the embodiment of the present invention. In addition, in a case where the electrode is a negative electrode, a slurry for forming a negative electrode, which contains a negative electrode active material, is applied onto a negative electrode collector as the slurry according to the embodiment of the present invention.

A method of applying the slurry is not particularly limited, and for example, the slurry can be applied by using a roll coater, drop coating, pressing (roll pressing or flat plate pressing) the slurry after evenly installing the slurry on the collector, or installing the slurry in a frame having a specified thickness and pressing the slurry.

In the method for manufacturing a non-aqueous electrolytic solution secondary battery according to the embodiment of the present invention, a typical method can be appropriately adopted except that the electrode active material layer is formed of the slurry according to the embodiment of the present invention. For example, JP2016-201308A, JP2005-108835A, JP2012-185938A, JP2017-147222A, and the like can be appropriately referred to.

The non-aqueous electrolytic solution secondary battery according to the embodiment of the present invention can be mounted on electronic apparatuses such as a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, a backup power supply, and a memory card. In addition, in a case of being used for consumer applications, the non-aqueous electrolytic solution secondary battery according to the embodiment of the present invention can be mounted on an automobile, an electric vehicle, a motor, a lighting instrument, a toy, a game device, a road conditioner, a watch, a strobe, a camera, a medical device (a pacemaker, a hearing aid, a shoulder massage device, and the like), or the like. Furthermore, the non-aqueous electrolytic solution secondary can be used for various military usages and universe usages. In addition, the secondary battery according to the embodiment of the present invention can also be combined with a solar battery.

Hereinafter, the present invention will be described in more detail with reference to Examples. The present invention is not interpreted as being limited thereto.

### Examples

### [Preparation of dispersant]

### <Preparation of polymer 1>

A polymer 1 was prepared by setting the blending amount (part by mass) of the monomer as shown in Table 1 below. The details are described below.

18 g of methoxypolyethylene glycol monomethacrylate (MPEGM), 2 g of butyl methacrylate (MBu), 3.5 g of azobisisobutyronitrile, and 40 g of methyl ethyl ketone were mixed with each other at room temperature to prepare a solution A.

100 g of methyl ethyl ketone was added to a three-neck flask equipped with a stirrer, a thermometer, a reflux condenser, a thermostat, and a dropping pump while performing nitrogen purge, and the temperature was raised to 85°C with stirring. The above-described solution A was added dropwise to the three-neck flask at a constant rate for 1 hour, using a dropwise addition pump. After completion of the dropwise addition, the mixture was stirred at the same temperature, and the reaction was completed after 5 hours. After completion of the reaction, the solution was concentrated to remove the methyl ethyl ketone, thereby obtaining a polymer 1. The obtained polymer 1 had an Mw of approximately 4,000. In the polymer 1, n in the constitutional component represented by General Formula (1) (constitutional component derived from MPEGM) corresponded to 10.

### <Preparation of polymers 2 to 4, 5a, 5e, 5f, 5h, and 6 to 17>

Polymers 2 to 4, 5a, 5e, 5f, 5h, and 6 to 17 were prepared in the same manner as in the preparation of the polymer 1 described above, except that the type and blending amount of the monomer in the preparation of the polymer 1 were as shown in Table 1. The polymers 5e, 5f, and 5h were obtained by changing n in the constitutional component represented by General Formula (1) (constitutional component derived from MPEGM) in the polymer 5a to 3, 30, and 50 as shown in Table 2 below, respectively.

### <Preparation of Polymers 5b, 5c, 5d, and 5g>

Polymers 5b, 5c, 5d, and 5g were prepared in the same manner as in the preparation of the polymer 5a described above, except that, in the preparation of the polymer 5a, the addition amount of azobisisobutyronitrile was changed such that the obtained polymer had a Mw shown in Table 2.

### <Preparation of polymer 18>

A polyvinylpyrrolidone (referred to as PVP; manufactured by Sigma-Aldrich Co., LLC, trade name: PVP10) was used as a polymer 18.

### <Preparation of polymer 19>

A polyvinyl alcohol (referred to as PVA; manufactured by Sigma-Aldrich Co., LLC, saponification degree: 80%) was used as a polymer 19.

**[Table 1]**

| Type of polymer | MPEGM | MPPGM | MPEGA | MBu | MPe | MSt | MDc | MBn | MNpM | ABn | NVF | NVP | TBMA | NVC |
|---|---|---|---|---|---|---|---|---|---|---|---|---|---|---|
| 1 | 90 | | | 10 | | | | | | | | | | |
| 2 | 90 | | | | 10 | | | | | | | | | |
| 3 | 90 | | | | | 10 | | | | | | | | |
| 4 | 90 | | | | | | 10 | | | | | | | |
| 5a | 90 | | | | | | | 10 | | | | | | |
| 6 | 90 | | | | | | | | 10 | | | | | |
| 7 | 90 | | | | | | | | | 10 | | | | |
| 8 | | 90 | | | | | | 10 | | | | | | |
| 9 | | | 90 | | | | | | | 10 | | | | |
| 10 | 80 | | | | | | | 20 | | | | | | |
| 11 | 99 | | | | | | | 1 | | | | | | |
| 12 | 70 | | | | | | | 30 | | | | | | |
| 13 | 100 | | | | | | | | | | | | | |
| 14 | 90 | | | | | | | | | | 10 | | | |
| 15 | 90 | | | | | | | | | | | 10 | | |
| 16 | 90 | | | | | | | | | | | | 10 | |
| 17 | 90 | | | | | | | | | | | | | 10 |

The names and structures of the monomers shown in Table 1 by abbreviation are shown below.
MPEGM: methoxypolyethylene glycol monomethacrylate
MPPGM: methoxypolypropylene glycol monomethacrylate
MPEGA: methoxypolyethylene glycol monoacrylate
MBu: butyl methacrylate
MPe: pentyl methacrylate
MSt: stearyl methacrylate
MDc: docosyl methacrylate
MBn: benzyl methacrylate
MNpM: (2-naphthyl)methyl methacrylate
ABn: benzyl acrylate
NVF: N-vinylformamide
NVP: N-vinylpyrrolidone
TBMA: N-t-butylmethacrylamide
NVC: N-vinylcarbazole

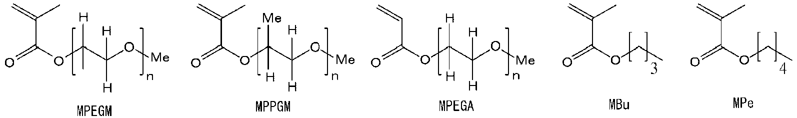

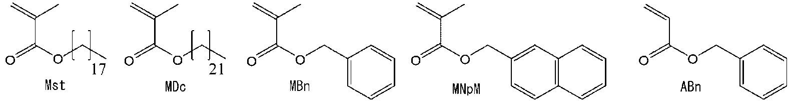

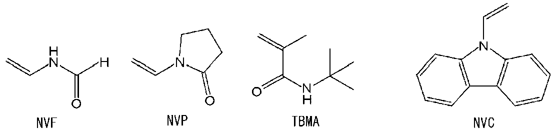

### [Preparation of slurry for forming electrode]

### <Preparation of non-aqueous electrolytic solution>

Ethylene carbonate (EC)/dimethyl carbonate (DMC)/ethyl methyl carbonate (EMC) = 3/4/3 (mass ratio) were mixed with each other to prepare a non-aqueous solvent. The non-aqueous solvent was mixed with LiPF₆ and each polymer adjusted as described above to obtain a non-aqueous electrolytic solution corresponding to each polymer type. The concentration of LiPF₆ in the non-aqueous electrolytic solution was set to 1 M (mol/liter), and the polymer concentration was set to 1% by mass.

### <Preparation of slurry for positive electrode>

74% by mass of LiFePO₄ (manufactured by Gelon Lib Group Co., Ltd.) as a positive electrode active material, 1.5% by mass of acetylene black (Denka Black manufactured by Denka Company Limited) as a conductive auxiliary agent, and 24.5% by mass of the above-described non-aqueous electrolytic solution were uniformly mixed using a centrifugal planetary mixer (manufactured by THINKY CORPORATION, trade name: Awatori Nentaro) to obtain a slurry for forming a positive electrode corresponding to each polymer type.

### <Preparation of slurry for forming negative electrode>

64% by mass of artificial graphite (UF-G30 manufactured by Showa Denko K.K.) as a negative electrode active material, 1% by mass of acetylene black (Denka Black manufactured by Denka Company Limited) as a conductive auxiliary agent, and 35% by mass of the above-described non-aqueous electrolytic solution were uniformly mixed using a centrifugal planetary mixer (manufactured by THINKY CORPORATION, trade name: Awatori Nentaro) to obtain a slurry for forming a negative electrode corresponding to each polymer type.

### [Production of non-aqueous electrolytic solution secondary battery (semi-solid-state secondary battery)]

The slurry for forming a positive electrode was applied onto an aluminum current collector of 8 cm in length and 5 cm in width with a thickness of 300 µm, and the slurry for forming a negative electrode was applied onto a copper current collector of 8 cm in length and 5 cm in width with a thickness of 300 µm. In this way, a positive electrode having a positive electrode active material layer (slurry layer) on a positive electrode collector and a negative electrode having a negative electrode active material layer (slurry layer) on a negative electrode collector were produced. Next, a separator was laminated on the negative electrode to form a negative electrode active material layer, and the positive electrode was laminated on the separator such that the positive electrode active material layer was in contact with the separator. An aluminum tab was attached to an end part of the aluminum collector and a nickel tab was attached to an end part of the copper collector by ultrasonic welding to obtain an electrode group. The electrode group was sandwiched between two aluminum laminate films, three sides were heat-sealed, and the remaining one side was vacuum-sealed to produce a laminated type battery. In this way, a semi-solid-state secondary battery corresponding to each polymer type was obtained.

### [Evaluation of battery performance]

The laminated battery was charged under the following charging conditions, and then discharged under the following discharging conditions to initialize the battery. Next, the battery was charged up to a state of charge (SOC) of 50% under the following charging conditions, the direct current resistance value was measured, and the obtained value was defined as the battery resistance.

### (Charging conditions)

CC-CV charging: current value of 10 mA, upper limit voltage of 3.6 V, termination current value of 0.5 mA

### (Discharging conditions)

CC discharging: current value of 10 mA, upper limit voltage of 2.0 V

The obtained resistance value was applied to the following evaluation standard to evaluate the battery performance. As the resistance is lower, it is evaluated to be excellent battery performance. The results are shown in Table 2.

### -Evaluation standard-

A: less than 30 Ωcm²
B: 30 Ωcm² or more and less than 40 Ωcm²
C: 40 Ωcm² or more

### [Fluidity test of slurry for forming electrode]

As described in the section of [Production of non-aqueous electrolytic solution secondary battery (semi-solid-state secondary battery)] above, a positive electrode having a positive electrode active material layer (slurry layer, 300 µm) on a positive electrode collector was obtained. A rate of change in film thickness in a case where the positive electrode was sandwiched between plates of stainless steel (SUS) and pressed at a pressure of 0.4 t (tons)/cm² for 30 seconds was calculated according to the following expression.

Rate of change in film thickness (%) = 100 - {(Film thickness after pressing)/(Film thickness before pressing)} × 100

The obtained rate of change in film thickness was applied to the following evaluation standard to evaluate the fluidity of the slurry for forming a positive electrode. As the rate of change in film thickness is higher, the fluidity is higher. In a case where the fluidity is high, the uniformity or reproducibility of the coating film is improved. The results are shown in Table 2.
A: 50% or more
B: 30% or more and less than 50%
C: 15% or more and less than 30%
D: less than 15%

As described in the section of [Production of non-aqueous electrolytic solution secondary battery (semi-solid-state secondary battery)] above, a negative electrode having a negative electrode active material layer (slurry layer, 300 µm) on a negative electrode collector was obtained. A rate of change in film thickness in a case where the negative electrode was sandwiched between plates of stainless steel (SUS) and pressed at a pressure of 0.4 t (tons)/cm² for 30 seconds was calculated in the same manner as described above. The obtained rate of change in film thickness was applied to the above-described evaluation standard to evaluate the fluidity of the slurry for forming a negative electrode. The results are shown in Table 2.

**[Table 2]**

| | Type of polymer | Mw of polymer | n in Formula (1) | Fluidity of slurry | | Battery resistance |
|---|---|---|---|---|---|---|
| | | | | Positive electrode | Negative electrode | |
| Example 1 | 2 | 4000 | 10 | C | B | B |
| Example 2 | 3 | 4000 | 10 | B | B | B |
| Example 3 | 5a | 4000 | 10 | A | A | A |
| Example 4 | 6 | 4000 | 10 | A | A | A |
| Example 5 | 7 | 4000 | 10 | A | A | A |
| Example 6 | 8 | 4000 | 10 | A | A | A |
| Example 7 | 9 | 4000 | 10 | A | A | A |
| Example 8 | 10 | 4000 | 10 | C | B | B |
| Example 9 | 11 | 4000 | 10 | B | B | B |
| Example 10 | 14 | 4000 | 10 | B | A | B |
| Example 11 | 15 | 4000 | 10 | A | A | A |
| Example 12 | 16 | 4000 | 10 | A | A | A |
| Example 13 | 17 | 4000 | 10 | B | B | B |
| Example 14 | 5b | 1000 | 10 | B | B | B |
| Example 15 | 5c | 10000 | 10 | A | A | A |
| Example 16 | 5d | 15000 | 10 | C | C | B |
| Example 17 | 5e | 4000 | 3 | C | C | B |
| Example 18 | 5f | 4000 | 30 | B | B | A |
| Comparative Example 1 | Not added | - | - | D | D | B |
| Comparative Example 2 | 1 | 4000 | 10 | D | D | C |
| Comparative Example 3 | 4 | 4000 | 10 | D | D | C |
| Comparative Example 4 | 12 | 4000 | 10 | D | D | C |
| Comparative Example 5 | 13 | 4000 | 10 | D | D | C |
| Comparative Example 6 | 5g | 20000 | 10 | D | D | C |
| Comparative Example 7 | 5h | 4000 | 50 | D | D | C |
| Comparative Example 8 | PVP | 10000 | - | * | * | * |
| Comparative Example 9 | PVA | 10000 | - | D | D | C |

| | | | | | | |
|---|---|---|---|---|---|---|
| * Not measured because the polymer was not dissolved in the electrolytic solution and did not function as the dispersant | | | | | | |

As shown in the table, Comparative Example 1 in which the dispersant was not added resulted in deteriorated fluidity of the slurry. In addition, the battery of Comparative Example 1 had a resistance of 30 Ωcm² or more, even in a state in which the polymer (insulating substance) was not contained.

In Comparative Examples 2, 3, and 5 in which the polymer constituting the dispersant contained the constitutional component represented by Formula (1) but did not contain any of the constitutional components represented by Formulae (2) and (3), the fluidity of the slurry was deteriorated. In addition, the battery resistance of Comparative Examples increased to 40 Ωcm² or more. In Comparative Example 7 in which the polymer constituting the dispersant did not contain the constitutional component represented by Formula (1), the same result was obtained.

In Comparative Example 4 in which the content ratio of the constitutional components did not satisfy the definition of the present invention even in a case where the structure of the constitutional component contained in the polymer constituting the dispersant satisfied the definition of the present invention, the fluidity of the slurry was deteriorated. In addition, the battery resistance of Comparative Examples increased to 40 Ωcm² or more.

In Comparative Example 6 in which the structure and the content ratio of the constitutional components contained in the polymer constituting the dispersant satisfied the definition of the present invention, but the Mw did not satisfy the definition of the present invention, the fluidity of the slurry was deteriorated. In addition, the battery resistance of Comparative Examples increased to 40 Ωcm² or more.

In Comparative Example 8 in which the polymer constituting the dispersant was PVP that did not contain any of the constitutional components represented by Formulae (1), (2), and (3), the polymer was not dissolved in the electrolytic solution and did not function as the dispersant in the slurry for forming an electrode defined by the present invention. In Comparative Example 9 in which the polymer constituting the dispersant was PVA, the polymer was dissolved in the electrolytic solution, but the fluidity of the slurry was deteriorated. In addition, the battery resistance of Comparative Examples increased to 40 Ωcm² or more.

In contrast, in Examples 1 to 18 in which the polymer constituting the dispersant satisfied the definition of the present invention, the fluidity of the slurry was excellent, and the battery resistance value was lower than that in Comparative Example 1 in which the polymer was not contained, even though the polymer (insulating substance) was contained.

From the above-described results, it was found that the dispersant defined in the present invention had excellent characteristics as the dispersant of the slurry for forming an electrode in the semi-solid-state secondary battery.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2023-074129 filed in Japan on April 28, 2023, the contents of which are incorporated herein by reference, as a part of the description of the present specification.

### Explanation of References

10: non-aqueous electrolytic solution secondary battery
1: negative electrode collector
2: negative electrode active material layer
3: separator
4: positive electrode active material layer
5: positive electrode collector
6: operation portion (light bulb)

## Claims

1. A slurry for forming an electrode comprising:
an electrode active material;
a conductive auxiliary agent;
a non-aqueous electrolytic solution; and
a dispersant,
wherein the dispersant consists of a polymer having a weight-average molecular weight of 1,000 to 15,000, the polymer containing 80% to 99% by mass of a constitutional component represented by Formula (1) and 1% to 20% by mass of constitutional components represented by Formulae (2) and (3) in total, 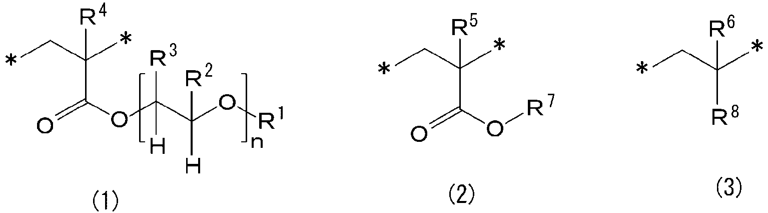 in the formulae,
* represents a linking site,
R¹ represents a hydrocarbon group having 1 to 8 carbon atoms,
R² to R⁶ represent a hydrogen atom or methyl,
R⁷ represents a hydrocarbon group having 5 to 18 carbon atoms,
R⁸ represents a group which has 1 to 12 carbon atoms and has a nitrogen atom, and
n is a number of 3 to 30.

2. The slurry for forming an electrode according to claim 1,
wherein the electrode active material is a positive electrode active material, and a content of the positive electrode active material in the slurry for forming an electrode is 60% to 90% by mass.

3. The slurry for forming an electrode according to claim 1,
wherein the electrode active material is a negative electrode active material, and a content of the negative electrode active material in the slurry for forming an electrode is 50% to 80% by mass.

4. The slurry for forming an electrode according to claim 2 or 3,
wherein a content of the dispersant is 0.1 to 5.0 parts by mass in 100 parts by mass of a total of the non-aqueous electrolytic solution and the dispersant.

5. A non-aqueous electrolytic solution secondary battery comprising:
an electrode active material layer composed of the slurry for forming an electrode according to claim 4.

6. A method for manufacturing a non-aqueous electrolytic solution secondary battery, comprising:
forming an electrode active material layer using the slurry for forming an electrode according to claim 4.

7. A dispersant used for a slurry for forming an electrode, containing an electrode active material, a conductive auxiliary agent, and a non-aqueous electrolytic solution, the dispersant comprising:
the following polymer,
<the polymer>
a polymer having a weight-average molecular weight of 1,000 to 15,000, the polymer containing 80% to 99% by mass of a constitutional component represented by Formula (1) and 1% to 20% by mass of constitutional components represented by Formulae (2) and (3) in total, 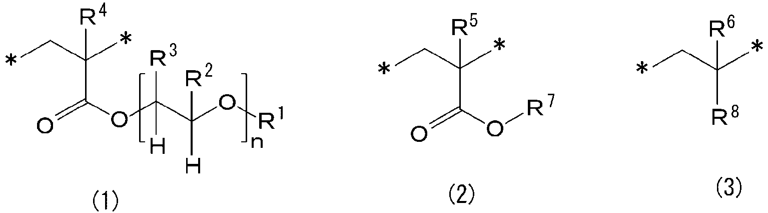 in the formulae,
* represents a linking site,
R¹ represents a hydrocarbon group having 1 to 8 carbon atoms,
R² to R⁶ represent a hydrogen atom or methyl,
R⁷ represents a hydrocarbon group having 5 to 18 carbon atoms,
R⁸ represents a group which has 1 to 12 carbon atoms and has a nitrogen atom, and n is a number of 3 to 30.
